(19) Europäisches Patentamt
European Patent Office
Office européen des brevets

(11) **EP 2 573 684 A1**

(12) **DEMANDE DE BREVET EUROPEEN**

(43) Date de publication:
**27.03.2013 Bulletin 2013/13**

(51) Int Cl.:
***G06F 17/14*** *(2006.01)*

(21) Numéro de dépôt: **12185513.4**

(22) Date de dépôt: **21.09.2012**

| | |
|---|---|
| (84) Etats contractants désignés:<br>**AL AT BE BG CH CY CZ DE DK EE ES FI FR GB GR HR HU IE IS IT LI LT LU LV MC MK MT NL NO PL PT RO RS SE SI SK SM TR**<br>Etats d'extension désignés:<br>**BA ME** | (72) Inventeur: **Aksenova, Tetiana**<br>**38100 Grenoble (FR)**<br><br>(74) Mandataire: **Priori, Enrico et al**<br>**Cabinet Orès**<br>**36, rue de St. Pétersbourg**<br>**75008 Paris (FR)** |
| (30) Priorité: **26.09.2011 FR 1158579**<br><br>(71) Demandeur: **COMMISSARIAT A L'ENERGIE ATOMIQUE ET AUX ENERGIES ALTERNATIVES**<br>**75015 Paris (FR)** | |

(54) **Procédé de transformation rapide en ondelettes d'un signal**

(57) Procédé de détermination d'au moins un coefficient d'ondelette $W_s(\tau)$ d'une transformée en ondelettes d'un signal, caractérisé en ce que :
- l'ondelette mère de la transformée présente un support subdivisé en $J \geq 1$ intervalles délimités par $(J+1)$ points d'extrémité et est définie par un polynôme de degré maximal $N \geq 1$ sur chaque dit intervalle ;
- et en ce que ledit procédé comprend les étapes suivantes :
a) calculer les primitives d'ordre k compris entre 2 et N+1 dudit signal, au moins en $(J+1)$ points correspondant auxdits points d'extrémité des intervalles du support de l'ondelette dilaté d'un facteur s et translaté d'un temps $\tau$ ;
b) calculer la convolution de ladite ou chaque dite primitive ainsi échantillonnée avec une succession respective de $(J+1)$ coefficients $C_i^k(s)$, fonctions de ladite ondelette ; et
c) déterminer ledit coefficient d'ondelette par calcul d'une combinaison linéaire desdites convolutions ;
lesdites étapes a) à c) étant mises en oeuvre par un processeur configuré ou programmé de manière appropriée.

Fig. 1

EP 2 573 684 A1

**Description**

L'invention porte sur un procédé de transformation en ondelettes rapide d'un signal. Un procédé selon l'invention est mis en oeuvre au moyen d'un processeur, de préférence en temps réel. L'invention porte également sur un processeur configuré ou programmé pour la mise en oeuvre d'un tel procédé.

Le procédé convient particulièrement bien à la mise en oeuvre d'une transformation continue en ondelettes, mais peut s'appliquer également au cas d'une transformation discrète.

Le signal à transformer est généralement un signal numérique ; il peut notamment s'agir d'un signal obtenu par échantillonnage et quantification d'un signal analogique, représentatif d'une grandeur physique. En particulier, le procédé de l'invention peut être appliqué au traitement de signaux neuronaux (neuroélectriques), notamment dans les systèmes de commande neuronale directe, ou d'interface cerveau-ordinateur.

La transformation en ondelettes est un outil important en traitement du signal, utilisé en particulier pour réaliser des analyses temps-fréquence. De manière générale, une transformée en ondelettes est définie par la convolution :

$$W_s(\tau) = \frac{1}{\sqrt{s}} \int_{-\infty}^{\infty} x(t)\psi^*\left(\frac{t-\tau}{s}\right) dt \tag{1}$$

où :

- $t$ est le temps ;
- $x(t)$ est le signal à transformer ;
- la fonction $\psi \in L^2(\mathbb{R})$ est l' « ondelette mère », dite aussi « fonction génératrice » ; généralement, elle présente un support compact $[-\alpha, +\alpha]$;
- $s>0$ est appelé le « facteur d'échelle » ;
- $\tau$ est le décalage temporel ;
- « * » indique le complexe conjugué ; en général, en effet, $\psi$ peut être une fonction à valeurs complexes, mais dans la suite on considérera, sans perte de généralité, le cas où elle est une fonction réelle ;
- $W_s(\tau)$ est un coefficient d'ondelette, fonction de s et de $\tau$.

On parle de transformation discrète en ondelettes (DWT, de l'anglais « Discrete Wavelet Transform ») lorsque s=a^m et $\tau$=nb, avec m,n entiers positifs. Si s et $\tau$ peuvent prendre toute valeur - toute valeur positive, dans le cas de *s* - on parle de transformation continue en ondelettes (CWT, de l'anglais « Continuous Wavelet Transform »), même si le signal x est discret, ce qui est généralement le cas pour en permettre un traitement numérique.

Les DWT sont généralement mieux adaptées, par exemple, au traitement de signaux neuronaux, parce qu'elles permettent d'analyser lesdits signaux à la résolution fréquentielle voulue.

Pour plus de précisions sur la transformée en ondelettes on peut se rapporter à : Béatrice PESQUET-POPESCU et Jean-Christophe PESQUET, « Ondelettes et applications », Techniques de l'Ingénieur, fascicule TE 5 215.

Des algorithmes rapides ont été développés pour réaliser des transformations discrètes en ondelettes. En revanche, les transformations continues en ondelettes restent relativement onéreuses en termes de temps et de ressources, ce qui limite leur utilisation dans les applications temps réel et à faible consommation d'énergie.

De manière conventionnelle, une CWT est mise en oeuvre, de façon approchée, en remplaçant, dans l'équation (1), l'intégrale par une somme discrète. On considère le cas d'un signal x(t) échantillonné aux intervalles discrets t=-1, 0, 1, 2 ... (dans un souci de simplicité, et sans perte de généralité, on prend l'échelle des temps telle que son pas de discrétisation vaut 1), et on pose x_i=x(t_i) ; l'ondelette mère $\psi$ est définie sur un support compact $[-\alpha, +\alpha]$. On définit la fonction : $\psi_s(t) = \frac{1}{\sqrt{s}}\psi\left(\frac{t}{s}\right)$, dont le support est $[-\alpha_s, +\alpha_s]$ avec $\alpha_s=\alpha/s$. L'équation (1) devient alors :

$$W_s(\tau) = \int_{-\alpha_s}^{\alpha_s} x(t+\tau)\psi_s(t)dt = \sum_{i=-\alpha_s}^{\alpha_s-1} \int_i^{i+1} x(t+\tau)\psi_s(t)dt$$

Pour calculer cette somme d'intégrales on effectue l'approximation de *signal constant par morceaux* : x(t)=$x_i$ $\forall t \in [i, i+1[$ (d'autres approximations sont possibles, par exemple une interpolation linéaire entre t=i et t=i+1) ; en outre, on se limite aux valeurs entiers de $\tau$ ($\tau$=...,-1, 0, 1, ...). On peut donc écrire :

$$W_s(\tau) = \sum_{i=-\alpha}^{\alpha-1} A_i x_{i+\tau} \qquad (2)$$

avec

$$A_i = \int_i^{i+1} \psi_s(t)dt \ .$$

En considérant connus les coefficients $A_i$, qui peuvent être calculés une fois pour toutes, on voit que la détermination d'un seul coefficient d'ondelette nécessite de ($2\alpha$-1) multiplications et ($2\alpha$-2) sommes. Or, $\alpha$ peut prendre des valeurs relativement importantes ; par exemple, pour effectuer l'analyse temps-fréquence d'un signal échantillonné à 1 kHz dans la plage fréquentielle 10 Hz - 300 Hz avec des ondelettes de Meyer, $\alpha$ est typiquement compris entre 100 et 3000.

L'article de M. Omachi et S. Omachi « Fast calculation of continuous wavelet transform using polynomial », Proceedings of the 2007 International Conference on Wavelet Analysis and Pattern Recognition, Beijing, Chine, 2 - 4 novembre 2007, décrit un procédé de CWT rapide d'un signal, dans lequel le nombre d'opérations requises ne dépend pas de $\alpha$. Dans ce procédé, l'ondelette mère est définie par un polynôme d'ordre d sur un support compact ; typiquement, l'ordre d et les coefficients du polynôme sont choisis de manière à approcher, avec l'exactitude recherchée, une ondelette « de référence » non polynômiale, telle qu'une ondelette de Haar. Les coefficients d'ondelettes sont déterminés de manière récursive ; ainsi, $W_s(\tau)$ est obtenu à partir de $W_{s-1}(\tau)$, le facteur d'échelle étant considéré entier. Le coût computationnel de la détermination du coefficient $W_s(\tau)$ est O($d$s).

Ce procédé présente un certain nombre d'inconvénients.

Premièrement, l'approximation polynômiale d'une ondelette « de référence » telle que l'ondelette de Haar peut nécessiter le recours à un ordre d élevé, ce qui augmente d'autant le coût computationnel du procédé.

Deuxièmement, il ne permet pas de déterminer les coefficients $W_s$ pour différents valeurs de s - et donc pour différentes fréquences - indépendamment les uns des autres. Au contraire, en raison du caractère récursif de l'algorithme, la détermination de $W_s$ implique nécessairement celle de $W_1$ ... $W_{s-1}$. Le procédé de M. Omachi et S. Omachi n'est donc pas optimisé pour les applications dans lesquelles un signal doit être analysé seulement dans certaines bandes spectrales.

L'invention vise à procurer un procédé permettant de déterminer rapidement au moins un coefficient d'ondelette $W_s(\tau)$ d'une transformée en ondelettes d'un signal, ne présentant pas les inconvénients précités de l'art antérieur.

Un objet de l'invention permettant d'atteindre ce but est un procédé de détermination d'au moins un coefficient d'ondelette $W_s(\tau)$ d'une transformation en ondelettes d'un signal, ladite transformation en ondelettes étant définie par rapport à une ondelette mère, **caractérisé en ce que** :

- ladite ondelette mère est une fonction continue, présentant un support subdivisé en J$\geq$1 intervalles délimités par (J+1) points d'extrémité, ladite fonction étant définie par un polynôme de degré maximal N$\geq$1 sur chaque dit intervalle ;
- et en ce que ledit procédé comprend les étapes consistant à :

  a) calculer toutes ou une partie des primitives d'ordre k compris entre 2 et N+1 dudit signal, au moins en (J+1) points correspondant auxdits points d'extrémité des intervalles du support de l'ondelette dilaté d'un facteur s et translaté d'un temps $\tau$ ;
  b) calculer la convolution de ladite ou chaque dite primitive ainsi échantillonnée avec une succession respective de (J+1) coefficients $C_i^k(s)$, fonctions de ladite ondelette ; et
  c) déterminer ledit coefficient d'ondelette par calcul d'une combinaison linéaire desdites convolutions ;

lesdites étapes a) à c) étant mises en oeuvre par un processeur configuré ou programmé de manière appropriée.

Contrairement au cas de l'algorithme de M. Omachi et S. Omachi, dans le procédé de l'invention l'ondelette mère n'est pas polynomiale, mais polynomiale par morceaux. Ainsi, l'ordre maximal N peut être maintenu petit (typiquement, N=2 ou N=3) tout en permettant d'approcher efficacement toute ondelette mère de référence à support compact. Le coût computationnel dépend à la fois de N (ordre maximal des polynômes définissant l'ondelette mère), de J (nombre d'intervalles ou morceaux) et de la régularité de l'ondelette $\psi$, polynomiale par morceaux ; on dispose ainsi d'une pluralité de paramètres permettant d'optimiser le procédé. En outre, les différents coefficients $W_s(\tau)$ peuvent être déterminés indépendamment les uns des autres.

Selon différents modes de réalisation du procédé de l'invention :

- Lesdits coefficients $C_i^k(s)$ peuvent être des fonctions des discontinuités des dérivés d'ordres compris entre 1 et N de l'ondelette en correspondance desdits points d'extrémités des intervalles constituant son support.
- Les étapes b) et c) peuvent être mises en oeuvre en appliquant l'équation suivante :

$$W_s(\tau) = \sum_{k=2}^{N+1} \sum_{i=0}^{J} (-1)^{k-1} C_i^k(s) X^{(k)}(\tau + \frac{\alpha_i}{s})$$

où :
- $W_s(\tau)$ est le coefficient d'ondelette recherché, correspondant à un décalage $\tau$ et à une dilatation s d'une ondelette mère $\psi(t)$
- $X^{(k)}(t)$ est la primitive d'ordre k du signal ;
- $\alpha_i$ sont les points d'extrémité des intervalles constituant le support de l'ondelette mère, pris dans l'ordre ; et
- $C_i^k(s)$, avec i compris entre 0 et J, sont les coefficients formant la succession avec laquelle est convolutée la primitive d'ordre k du signal.

En particulier, les coefficients $C_i^k(s)$ peuvent être donnés par :

$$C_i^k(s) = \left(\psi_{i-1}^S\right)^{(k-1)}(\frac{\alpha_i}{s}) - \left(\psi_i^s\right)^{(k-1)}(\frac{\alpha_i}{s}), \quad i = 1,...,J-1$$

$$C_0^k(s) = -\left(\psi_0^S\right)^{(k-1)}(\frac{\alpha_0}{s})$$

$$C_J^k(s) = \left(\psi_J^S\right)^{(k-1)}(\frac{\alpha_J}{s})$$

où $(\psi_i^s)^{(k-1)}$ est la dérivée d'ordre (k-1) de la fonction $\psi_i^\mathbf{s} = \psi_i^s(t) = \dfrac{1}{\sqrt{s}} \psi_i\left(\dfrac{t}{s}\right)$, , $\psi_i$ étant le polynôme qui définit l'ondelette mère sur le i-ème intervalle de son support.

- Ladite étape a) peut comprendre :

  a1) le calcul desdites primitives d'ordre k compris entre 2 et N+1 dudit signal ; et
  a2) leur échantillonnage en (J+1) points d'échantillonnage correspondant auxdits points d'extrémité des intervalles du support de l'ondelette dilaté d'un facteur s et translaté d'un temps $\tau$.

- Dans un cas particulièrement simple à mettre en oeuvre, ladite ondelette peut être une fonction continue et à dérivée première continue, polynomiale d'ordre deux par morceaux ; dans ce cas, ladite étape a) comporte le calcul de la seule primitive d'ordre 3 dudit signal et les étapes b) et c) peuvent être mises en oeuvre en appliquant l'équation suivante :

$$W(\tau) = \sum_{i=0}^{J} B_i X^{(3)}\left(\tau + \frac{\alpha_i}{s}\right)$$

où :

$$B_i = 2\frac{1}{\sqrt{s}}\frac{1}{s^2}(p_{i-1} - p_i), i = 1,\dots, J-1 \;;$$

$$B_0 = -2\frac{1}{\sqrt{s}}\frac{1}{s^2}p_0 \;;$$

$$B_J = \frac{1}{\sqrt{s}}\frac{1}{s^2}2p_J \;.$$

- Ladite étape a) peut être mise en oeuvre en temps réel, lesdites primitives étant alors calculées en tant que sommes cumulatives pendant une étape d'acquisition dudit signal, puis stockées dans une première mémoire dudit processeur. En outre, lesdites successions de coefficients $C_i^k(s)$ peuvent être stockées dans une deuxième mémoire dudit processeur préalablement à ladite étape d'acquisition dudit signal.

Un autre objet de l'invention est un procédé de transformation en ondelettes d'un signal à temps discret ou discrétisé, comportant la détermination d'une pluralité de coefficients d'ondelette associés à différentes dilatations/translations d'une même ondelette mère, **caractérisé en ce que** chaque dit coefficient d'ondelette est déterminé par un procédé tel que décrit ci-dessus.

Encore un autre objet de l'invention est un procédé de transformation en ondelettes d'un signal, comportant la détermination d'une pluralité de coefficients d'ondelette associés à différentes dilatations/translations d'une même ondelette mère, **caractérisé en ce que** chaque coefficient d'ondelette $W_s(\tau)$, correspondant à un décalage $\tau$ et à une dilatation s d'une ondelette mère $\psi(t)$, est déterminé par un procédé tel que décrit ci-dessus, dans lequel :

- ladite étape a) est mise en oeuvre en temps réel, lesdites primitives étant calculées en tant que sommes cumulatives pendant une étape d'acquisition dudit signal, puis stockées dans une première mémoire dudit processeur ;
- lesdites étapes b) et c) sont mises en oeuvre en temps réel en utilisant des successions de coefficients préalablement stockées dans une deuxième mémoire dudit processeur ;

les coefficients d'ondelette $W_s(\tau)$, correspondant à un décalage $\tau$ et à une dilatation s d'une ondelette mère $\psi(t)$, étant déterminés à partir du temps $t=\tau+\alpha/s$, où $\alpha$ est la demi-largeur du support de ladite ondelette mère.

Ledit signal peut être un signal numérique, le cas échéant obtenu par échantillonnage et quantification d'un signal analogique. En particulier, le signal peut un signal acquis par un détecteur tel une électrode, un photodétecteur, un détecteur acoustique ou, d'une manière générale, tout détecteur ou capteur délivrant un signal électrique sous l'effet d'un paramètre physique, chimique ou biologique. Encore plus particulièrement, il peut s'agir d'un signal représentatif d'une activité neuronale d'un cerveau, notamment humain (signal neurologique ou neuroélectrique).

Encore un autre objet de l'invention est un processeur configuré ou programmé pour mettre en oeuvre un procédé selon l'une des revendications précédentes. On entend par processeur toute machine pour le traitement de l'information ; typiquement, il pourra s'agir d'un processeur électronique, de préférence numérique. En particulier il pourra s'agir d'une ordinateur conventionnel programmé de manière opportune, d'un processeur dédié au traitement de signaux numériques (DSP, de l'anglais « Digital Signal Processor »), d'un circuit numérique câblé, d'un système hybride programmé/câblé, etc.

D'autres caractéristiques, détails et avantages de l'invention ressortiront à la lecture de la description faite en référence aux dessins annexés donnés à titre d'exemple et qui représentent, respectivement :

- la figure 1, un schéma à blocs d'un procédé selon un mode de réalisation de l'invention ; et
- la figure 2, un schéma fonctionnel d'un processeur pour la mise en oeuvre d'un procédé en temps réel selon un mode de réalisation de l'invention.

Le procédé selon l'invention sera d'abord illustré dans le cas simple d'une ondelette mère quadratique par morceaux (N=2) définie sur l'intervalle [-$\alpha$, $\alpha$], et pour s=1. Dans ce cas, on peut écrire :

$$W(\tau) = \int_{-\alpha}^{\alpha} x(t+\tau)\psi(t)dt \qquad (3)$$

Soit -$\alpha = \alpha_0 < \alpha_1 < ... < \alpha_J = \alpha$ la partition du support [-$\alpha$, $\alpha$] ; alors, l'ondelette mère $\psi(t)$, continue, est définie par :

$$\psi(t) = \begin{cases} p_j t^2 + q_j t + r_j & \forall t \in [\alpha_j, \alpha_{j+1}] \\ \psi(t) = 0 & \forall |t| \geq \alpha \end{cases} \qquad (4)$$

En intégrant (3) par parties on obtient :

$$W(\tau) = \int_{-\alpha}^{\alpha} x(t+\tau)\psi(t)dt = \sum_{j=0}^{J-1} \int_{\alpha_j}^{\alpha_{j+1}} x(t+\tau)\psi(t)dt =$$

$$= \sum_{j=0}^{J-1} \left( X^{(1)}(t+\tau)\psi(t)\Big|_{\alpha_j}^{\alpha_{j+1}} - \int_{\alpha_j}^{\alpha_{j+1}} X^{(1)}(t+\tau)\psi'(t)dt \right). \qquad (5)$$

où $X^{(1)}(t)$ est une primitive d'ordre 1 de la fonction $x(t)$, c'est-à-dire une fonction dont la dérivée première par rapport à $t$ est $x(t)$ .

Pour une ondelette mère $\psi(t)$ continue, et en considérant que: $\psi(-\alpha) = \psi(\alpha_0) = \psi(\alpha_J) = \psi(\alpha) = 0$ on a :

$$\sum_{j=0}^{J-1} X^{(1)}(t+\tau)\psi(t)\Big|_{\alpha_j}^{\alpha_{j+1}} = \sum_{j=0}^{J-1} \left( X^{(1)}(\alpha_{j+1}+\tau)\psi(\alpha_{j+1}) - X^{(1)}(\alpha_j+\tau)\psi(\alpha_j) \right) =$$

$$= \sum_{j=1}^{J} \left( X^{(1)}(\alpha_j+\tau)\psi(\alpha_j) \right) - \sum_{j=0}^{J-1} \left( X^{(1)}(\alpha_j+\tau)\psi(\alpha_j) \right) =$$

$$= X^{(1)}(\alpha_J+\tau)\psi(\alpha_J) - X^{(1)}(\alpha_0+\tau)\psi(\alpha_0) = 0$$

Donc :

$$W(\tau) = \int_{-\alpha}^{\alpha} x(t+\tau)\psi(t)dt = \sum_{j=0}^{J-1}\left(-\int_{\alpha_j}^{\alpha_{j+1}} X^{(1)}(t+\tau)\psi'(t)dt\right) = -\int_{-\alpha}^{\alpha} X^{(1)}(t+\tau)\psi'(t)dt$$

$$(6)$$

En intégrant (6) par parties et en supposant, en outré, que la fonction linéaire par morceaux $\psi'(t) = 2p_j^t + q_j$ $t \in$ [$\alpha_j$, $\alpha_{j+1}$] est continue on trouve :

$$W(\tau) = \int_{-\alpha}^{\alpha} x(t+\tau)\psi(t)dt = \int_{-\alpha}^{\alpha} X^{(2)}(t+\tau)\psi''(t)dt$$

$$(7)$$

où $X^{(2)}(t)$ est une primitive d'ordre 2 de la fonction $x(t)$, c'est-à-dire une fonction dont la dérivée seconde par rapport à $t$ est $x(t)$.

Pour obtenir (7) on a exploité le fait que $\psi'(t) = 0$ $\forall |t| \geq \alpha$.

La dérivé seconde de $\psi(t)$ est une fonction constante par morceaux: $\psi''(t)=2p_j$ $\forall t \in \lfloor \alpha_j, \alpha_{j+1} \rfloor$, ce qui permet d'écrire :

$$W(\tau) = \sum_{j=0}^{J-1}\int_{\alpha_j}^{\alpha_{j+1}} X^{(2)}(t+\tau)\psi''(t)dt = \sum_{j=0}^{J-1}2p_j\int_{\alpha_j}^{\alpha_{j+1}} X^{(2)}(t+\tau)dt = \sum_{j=0}^{J-1}2p_j\int_{\alpha_j}^{\alpha_{j+1}} X^{(2)}(t+\tau)dt =$$

$$= \sum_{j=0}^{J-1}2p_j(X^{(3)}(\tau+\alpha_{j+1}) - X^{(3)}(\tau+\alpha_j)) = \sum_{j=1}^{J}2p_{j-1}X^{(3)}(\tau+\alpha_j) - \sum_{j=0}^{J-1}2p_jX^{(3)}(\tau+\alpha_j) =$$

$$= 2p_{J-1}X^{(3)}(\tau+\alpha_J) - 2p_0X^{(3)}(\tau+\alpha_0) + \sum_{j=1}^{J-1}2(p_{j-1} - p_j)X^{(3)}(\tau+\alpha_j)$$
.

où $X^{(3)}(t)$ est une primitive d'ordre 3 de la fonction $x(t)$, c'est-à-dire une fonction dont la dérivée troisième par rapport à $t$ est $x(t)$.

On obtient donc :

$$W(\tau) = \sum_{i=0}^{J} B_i X^{(3)}(\tau+\alpha_i)$$

$$(8)$$

avec:

$$B_i = 2(p_{i-1} - p_i), i = 1,...,J-1 \ ;$$

$$B_0 = -2p_0 \ ;$$

$$B_J = 2p_J.$$

En supposant que la primitive d'ordre 3 de x(t) est connue, il faut donc J+1 multiplications et autant de sommes pour déterminer un coefficient d'ondelette, au lieu des $(2\alpha-1)$ multiplications et $(2\alpha-2)$ sommes nécessaires pour appliquer directement l'équation (2).

Si la dérivée première de l'ondelette mère $\psi(t)$ n'est pas continue, alors la somme

$$\sum_{j=0}^{J-1} X^{(2)}(t+\tau)\psi'(t)\Big|_{\alpha_j}^{\alpha_{j+1}}$$ n'est plus égale à zéro.

Un calcul élémentaire permet de montrer que

$$\sum_{j=0}^{J-1} X^{(2)}(t+\tau)\psi'(t)\Big|_{\alpha_j}^{\alpha_{j+1}} = \sum_{j=0}^{J-1}\left(X^{(2)}(t+\tau)(2p_j t + q_j)\right)\Big|_{\alpha_j}^{\alpha_{j+1}} =$$

$$= \sum_{j=1}^{J-1}\left((2\alpha_j(p_{j-1}-p_j)+q_{j-1}-q_j)X^{(2)}(\alpha_j+\tau)+\right.$$

$$-(2p_0\alpha_0+q_0)X^{(2)}(\alpha_0+\tau)+(2p_{J-1}\alpha_J+q_{J-1})X^{(2)}(\alpha_J+\tau).$$

Le coefficient d'ondelette W($\tau$) est donc donné par :

$$W(\tau) = \sum_{i=0}^{J} B_i X^{(3)}(\tau+\alpha_i) + (-1)\sum_{i=0}^{J} C_i X^{(2)}(\alpha_i+\tau) \quad (9)$$

avec:

$$B_i = 2(p_{i-1}-p_i), i=1,\ldots,J-1 \quad ;$$

$$B_0 = -2p_0 \quad ;$$

$$B_J = 2p_J \quad ;$$

$$C_i = 2\alpha_i(p_{i-1}-p_j)+q_{i-1}-q_i, \quad i=1,\ldots,J-1;$$

$$C_0 = -(2p_0\alpha_0 + q_0);$$

$$C_J = 2p_{J-1}\alpha_J + q_{J-1}.$$

Dans ce cas, la détermination d'un coefficient d'ondelette nécessite 2(J+1) sommes et multiplications.

L'équation (9) peut être généralisée au cas d'un ordre de polynôme N quelconque. Dans ce cas l'ondelette mère $\psi(t)$ peut être exprimée
par:

$$\psi(t) = \begin{cases} \psi_j(t), & t \in [\alpha_j, \alpha_{j+1}] \\ 0, & |t| \geq \alpha \end{cases}$$

avec $\psi_j(t) = p_j^N t^N + p_j^{N-1} t^{N-1} + \dots p_j^0$, $\psi(t)$ étant en outre une fonction continue et telle que $\psi(-\alpha) = \psi(\alpha_0) = \psi(\alpha_J) = \psi(\alpha) = 0$.

En intégrant (3) par parties (N+1) fois on obtient :

$$W(\tau) = \sum_{k=2}^{N+1} \sum_{i=0}^{J} (-1)^{k-1} C_i^k X^{(k)}(\tau + \alpha_i) \qquad (10)$$

avec :

$$C_i^k = \psi_{i-1}^{(k-1)}(\alpha_i) - \psi_i^{(k-1)}(\alpha_i), \quad i = 1, \dots, J-1,$$

$$C_0^k = -\psi_0^{(k-1)}(\alpha_0)$$

$$C_J^k = \psi_J^{(k-1)}(\alpha_J)$$

L'équation (10) montre qu'en général le nombre d'opération nécessaires à la détermination d'un coefficient d'ondelette est proportionnel à l'ordre N des polynômes. Toutefois, cela n'est pas vrai si $\psi(t)$ est choisie de telle manière que ses dérivées soient continues, parce que dans ce cas plusieurs des coefficients $C_i^k$ s'annulent. Dans le cas d'une fonction polynômiale par morceaux d'ordre N, continue et dont toutes les dérivées jusqu'à l'ordre (N-1) sont continues, l'équation (10) se simplifie de la façon suivante :

$$W(\tau) = (-1)^N \sum_{i=0}^{J} C_i^{(N+1)} X^{(N+1)}(\tau + \alpha_i) \qquad (11)$$

$$C_i^{(N+1)} = N!(p_{i-1}^N - p_i^N), i = 1, \ldots, J-1$$

$$C_0^{(N+1)} = -N! p_0^N$$

$$C_J^{(N+1)} = N! p_J^N$$

Dans ce cas, le coût computationnel ne dépend pas de l'ordre N, et seule la primitive d'ordre (N+1) doit être calculée. Par conséquent, pour minimiser le coût computationnel il convient d'utiliser des polynômes d'ordre faible et/ou des ondelettes mères présentant des dérivées continues.

Jusqu'ici on s'est limités au cas d'un facteur d'échelle s constant, conventionnellement pris égal à 1. Il est désormais possible de relâcher cette hypothèse et de considérer une ondelette $\psi_s(t) = \dfrac{1}{\sqrt{s}} \psi_1\left(\dfrac{t}{s}\right)$, continue, définie sur l'intervalle $\left[-\dfrac{\alpha}{s}, \dfrac{\alpha}{s}\right]$ avec la partition $-\dfrac{\alpha}{s} = \dfrac{\alpha_0}{s} < \dfrac{\alpha_1}{s} < \ldots < \dfrac{\alpha_J}{s} = \dfrac{\alpha}{s}$, polynomiale par

morceaux et dont l'expression est $\psi_s(t) = \begin{cases} \psi_j^S(t), & t \in \left[\dfrac{\alpha_j}{s}, \dfrac{\alpha_{j+1}}{s}\right] \\ 0, & |t| \geq \dfrac{\alpha}{s} \end{cases}$, avec

$$\psi_j^S(t) = \left(p_j^N\right)_S t^N + \left(p_j^{N-1}\right)_S t^{N-1} + \ldots + \left(p_j^0\right)_S \text{ et } \left(p_j^i\right)_S = \frac{1}{\sqrt{s}} \frac{1}{s^i} \left(p_j^i\right)_1 .$$

Dans ce cas général, le coefficient d'ondelette $W_s(\tau)$ peut être déterminé en appliquant l'équation :

$$W_s(\tau) = \sum_{k=2}^{N+1} \sum_{i=0}^{J} (-1)^{k-1} C_i^k(s) X^{(k)}(\tau + \frac{\alpha_i}{s}) \qquad (12)$$

avec :

$$C_i^k(s) = \left(\psi_{i-1}^S\right)^{(k-1)}(\frac{\alpha_i}{s}) - \left(\psi_i^s\right)^{(k-1)}(\frac{\alpha_i}{s}), \quad i = 1,...,J-1,$$

$$C_0^k(s) = -\left(\psi_0^S\right)^{(k-1)}(\frac{\alpha_0}{s}) \quad ;$$

$$C_J^k(s) = \left(\psi_J^S\right)^{(k-1)}(\frac{\alpha_J}{s}) \quad .$$

Il convient de noter que les coefficients $C_i^k$ dépendent uniquement de l'ondelette mère $\psi(t)$, et peuvent donc être calculés une fois pour toutes, avant même l'acquisition du signal $x(t)$. Le calcul de ces coefficients ne contribue donc pas au temps de traitement, et son coût computationnel peut être négligé.

Dans le cas particulier d'une ondelette mère constituée par des polynômes d'ordre deux, $\psi_1(t) = p_j t^2 + q_j t + r_j$ et présentant une dérivée première continue on obtient :

$$W(\tau) = \sum_{i=0}^{J} B_i X^{(3)}(\tau + \frac{\alpha_i}{s}) \tag{13}$$

avec:

$$B_i = 2\frac{1}{\sqrt{s}}\frac{1}{s^2}(p_{i-1} - p_i), i = 1,...,J-1 \quad ;$$

$$B_0 = -2\frac{1}{\sqrt{s}}\frac{1}{s^2}p_0 \quad ;$$

$$B_J = \frac{1}{\sqrt{s}}\frac{1}{s^2}2p_J \quad .$$

Différentes approches peuvent être suivies pour calculer les primitives $X^{(1)}, ..., X^{(k)}, ... X^{(N+1)}$.

En général, le signal $x(t)$ est en réalité un signal discret, ou bien un signal continu échantillonné à des instants discrets : $x(t) \rightarrow x(i) = x_i$, i=...-1, 0, 1, 2, ... Pour calculer les primitives, on peut notamment se baser sur l'approximation de signal constant par morceaux : $x(t) = x_i$, $t \in [i, i+1]$.

On remarque que $i$ est l'arrondi à l'entier inférieur du temps $t$ (avec une échelle des temps appropriée) $t:i=\lfloor t \rfloor$.

On peut donc écrire $t=i+\Delta$, $\Delta=t-i\leq1$.

Alors :

$$X^{(1)}(i+\Delta) = X^{(1)}(i) + \int_{i}^{i+\Delta} x_i dt = X^{(1)}(i) + x_i \Delta \quad ;$$

$$X^{(2)}(i+\Delta) = X^{(2)}(i) + \int_{i}^{i+\Delta} X^{(1)}(i+\Delta) dt = X^{(2)}(i) + X^{(1)}(i)\Delta + x_i \frac{\Delta^2}{2} \quad ;$$

$$X^{(3)}(i+\Delta) = X^{(3)}(i) + X^{(2)}(i)\Delta + X^{(1)}(i)\frac{\Delta^2}{2} + x_i \frac{\Delta^3}{6}$$

et ainsi de suite.

On remarquera que les primitives sont définies à une constante d'intégration près. Dans les équations ci-dessus on a implicitement admis $X^{(3)}(0) = 0$ $X^{(2)}(0) = 0$ $X^{(1)}(0) = 0$, ce qui permet de fixer lesdites constants d'intégration.

Si on est intéressés seulement aux valeurs entières du temps t on peut poser $\Delta = 1$, ce qui donne :

$$X^{(1)}(i+1) = X^{(1)}(i) + x_i \quad ;$$

$$X^{(2)}(i+1) = X^{(2)}(i) + X^{(1)}(i) + \frac{x_i}{2} ; \qquad (14)$$

$$X^{(3)}(i+1) = X^{(3)}(i) + X^{(2)}(i) + \frac{X^{(1)}(i)}{2} + \frac{x_i}{6}$$

et ainsi de suite.

Il est facile de se rendre compte que les équations (14) permettent de calculer les primitives « au fil de l'eau », c'est-à-dire au fur et à mesure que les échantillons du signal x(t) sont acquis, par des sommes cumulatives. Cela signifie que le calcul des primitives n'augmente pas le temps de traitement, ce qui est très avantageux dans les applications temps réel. Les équations (14) ont été obtenues sur la base de l'approximation de signal constant par morceaux ; des équations similaires peuvent être obtenues en utilisant une interpolation différente, par exemple linéaire.

Il convient de noter que les équations (14) donnent les valeurs des primitives de $x(i)$ pour tous les temps $i$.

Cependant, la détermination des coefficients d'ondelettes $W_s(\tau)$ nécessitent seulement leurs valeurs aux temps $\tau + \dfrac{\alpha_i}{s}$

(voir l'équation 12). En d'autres termes, les primitives calculées au moyen des équations (14) doivent être échantillonnées en (J+1) points d'échantillonnage correspondant auxdits points d'extrémité des intervalles du support de l'ondelette $\psi_s$ (t-$\tau$) obtenue en dilatant d'un facteur s l'ondelette mère $\psi$(t) et en la translatant d'un temps $\tau$. Seuls ces échantillons sont utilisés pour déterminer $W_s(\tau)$.

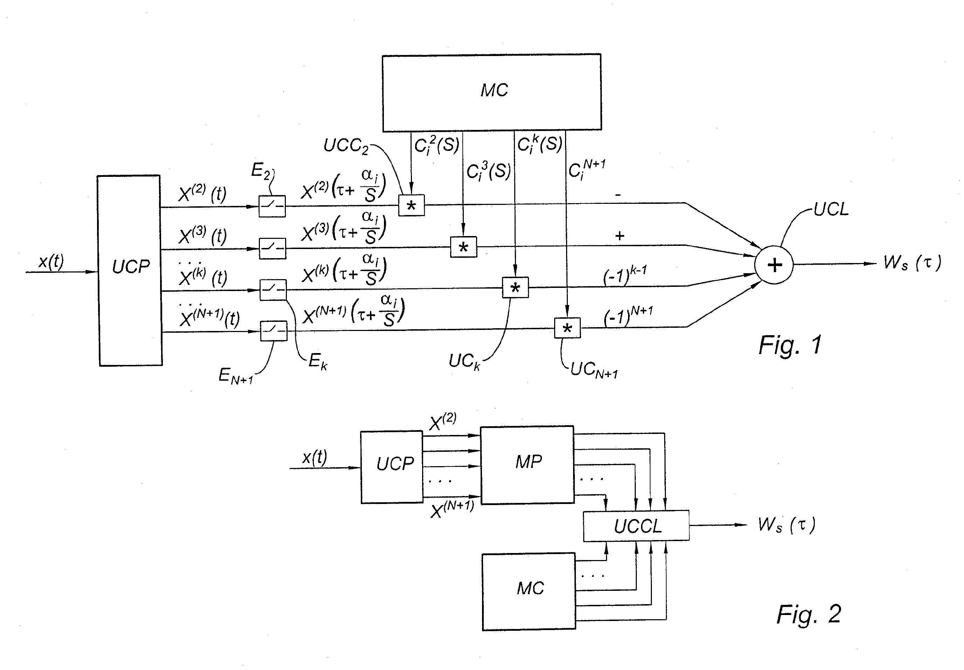

Les différentes étapes du procédé que l'on vient de décrire sont illustrées par la figure 1. De la gauche vers la droite on peut voir que, pendant que le signal x(t) est acquis - et, le cas échéant, échantillonné, quantifié et converti en format numérique - le bloc UCP calcule « au fil de l'eau » ses primitives $X^{(2)}(t)$, $X^{(3)}(t)$ ... $X^{(k)}(t)$... $X^{(N+1)}(t)$ pour toutes les valeurs (qu'on peut supposer discrètes) de $t$. Ensuite, les blocs $E_2$ ... $E_k$...$E_{N+1}$ échantillonnent ces primitives aux

temps $\tau + \dfrac{\alpha_i}{s}$. Les primitives ainsi échantillonnées sont convolutés, dans les blocs $UCC_2 \dots UCC_k \dots UCC_{N+1}$ avec les successions formées par les coefficients $C_i^2(s)$, $C_i^3(s) \dots C_i^k(s) \dots C_i^{N+1}(s)$ extraits d'une mémoire MC - ce qui correspond, dans l'équation (12), à la somme par rapport à l'indice J. Ensuite, les résultats de ces convolutions sont combinés linéairement dans un bloc additionneur UCL avec un signe $(-1)^{k-1}$, c'est-à-dire alternativement + ou -, ce qui correspond, dans l'équation (12), à la somme par rapport à l'indice $k$.

Il convient de noter que les blocs UCP, $E_k$, $UCC_k$ et UCL sont des blocs fonctionnels qui ne correspondent pas nécessairement à des structures physiques d'un processeur utilisé pour la mise en oeuvre du procédé.

La figure 2 illustre l'application d'un tel procédé à la transformation en ondelettes en temps réel d'un signal $x(t)$, c'est-à-dire à la détermination des coefficients $W_s(\tau)$ pour une pluralité de valeurs de $s=s_1$, $s_2 \dots$ et de $\tau=\tau_1$, $\tau_2 \dots$

Le bloc UCP calcule au fil de l'eau les primitives $X^{(k)}(t)$ comme sommes cumulatives des échantillons du signal $x(t)$. Les primitives ainsi calculées sont stockées dans la mémoire MP, qui est de préférence une mémoire glissante.

En même temps, les valeurs déjà calculées des primitives correspondant aux temps $\tau + \dfrac{\alpha_i}{s}$ sont lues de ladite mémoire MP et adressées s vers une unité de calcul UCCL. Les coefficients $C_i^k(s)$ sont également lus d'une deuxième mémoire MC et adressés à leur tour vers l'unité UCCL. Cette dernière détermine les coefficients d'ondelette $W_s(\tau)$ dès que cela est possible. En effet, l'équation (12) montre que pour déterminer $W_s(\tau)$ il est nécessaire de connaitre les primitives $X^{(k)}$ seulement dans l'intervalle $\left[ \tau \pm \dfrac{\alpha}{s} \right]$. Par conséquent, à chaque instant $t$, il est possible de déterminer $W_S(\tau) \; \forall \tau \le t - \dfrac{\alpha}{s}$. La transformation en ondelettes peut donc être effectuée en temps réel, avec un décalage égal à $\alpha + T_P$ par rapport au signal, $T_P$ étant un retard dû au temps de traitement.

Là encore, les blocs UCP, MP, MC, UCCL doivent être considérés comme des blocs fonctionnels, qui ne correspondent pas nécessairement à des structures physiques d'un processeur utilisé pour la mise en oeuvre du procédé.

**Revendications**

1. Procédé de détermination d'au moins un coefficient d'ondelette $W_s(\tau)$ d'une transformée en ondelettes d'un signal, ladite transformée en ondelettes étant définie par rapport à une ondelette mère, **caractérisé en ce que** :

   - ladite ondelette mère est une fonction continue, présentant un support subdivisé en $J \ge 1$ intervalles délimités par $(J+1)$ points d'extrémité, ladite fonction étant définie par un polynôme de degré maximal $N \ge 1$ sur chaque dit intervalle ;
   - et **en ce que** ledit procédé comprend les étapes consistant à :

      a) calculer toutes ou une partie des primitives d'ordre k compris entre 2 et N+1 dudit signal, au moins en $(J+1)$ points correspondant auxdits points d'extrémité des intervalles du support de l'ondelette dilaté d'un facteur s et translaté d'un temps $\tau$;
      b) calculer la convolution de ladite ou chaque dite primitive ainsi échantillonnée avec une succession respective de $(J+1)$ coefficients $C_i^k(s)$, fonctions de ladite ondelette ; et
      c) déterminer ledit coefficient d'ondelette par calcul d'une combinaison linéaire desdites convolutions ;
      lesdites étapes a) à c) étant mises en oeuvre par un processeur configuré ou programmé de manière appropriée.

2. Procédé selon la revendication 1 dans lequel lesdits coefficients $C_i^k(s)$ sont des fonctions des discontinuités des dérivés d'ordres compris entre 1 et N de l'ondelette en correspondance desdits points d'extrémités des intervalles constituant son support.

3. Procédé selon la revendication 2 dans lequel les étapes b) et c) sont mises en oeuvre en appliquant l'équation suivante :

$$W_s(\tau) = \sum_{k=2}^{N+1} \sum_{i=0}^{J} (-1)^{k-1} C_i^k(s) X^{(k)}(\tau + \frac{\alpha_i}{s})$$

où :

- $W_s(\tau)$ est le coefficient d'ondelette recherché, correspondant à un décalage $\tau$ et à une dilatation s d'une ondelette mère $\psi(t)$
- $X^{(k)}(t)$ est la primitive d'ordre k du signal ;
- $\alpha_i$ sont les points d'extrémité des intervalles constituant le support de l'ondelette mère, pris dans l'ordre ; et
- $C_i^k(s)$, avec i compris entre 0 et J, sont les coefficients formant la succession avec laquelle est convolutée la primitive d'ordre k du signal.

4. Procédé selon la revendication 3 dans lequel les coefficients $C_i^k(s)$ sont donnés par :

$$C_i^k(s) = \left(\psi_{i-1}^S\right)^{(k-1)}(\frac{\alpha_i}{s}) - \left(\psi_i^s\right)^{(k-1)}(\frac{\alpha_i}{s}), \quad i = 1, ..., J-1$$

$$C_0^k(s) = -\left(\psi_0^S\right)^{(k-1)}(\frac{\alpha_0}{s})$$

$$C_J^k(s) = \left(\psi_J^S\right)^{(k-1)}(\frac{\alpha_J}{s})$$

où $(\psi_i^S)^{(k-1)}$ est la dérivée d'ordre (k-1) de la fonction $\psi_i^S = \psi_i^s(t) = \dfrac{1}{\sqrt{s}} \psi_i\left(\dfrac{t}{s}\right)$, , $\psi_i$ étant le polynôme qui définit l'ondelette mère sur le i-ème intervalle de son support.

5. Procédé selon l'une des revendications précédentes, dans laquelle ladite ondelette est une fonction continue et à dérivée première continue, polynomiale d'ordre deux par morceaux, dans lequel ladite étape a) comporte le calcul de la seule primitive d'ordre 3 dudit signal et dans lequel les étapes b) et c) sont mises en oeuvre en appliquant l'équation suivante :

$$W(\tau) = \sum_{i=0}^{J} B_i X^{(3)}(\tau + \frac{\alpha_i}{s})$$

où:

$$B_i = 2 \frac{1}{\sqrt{s}} \frac{1}{s^2} (p_{i-1} - p_i), i = 1, ..., J-1 \;;$$

$$B_0 = -2\frac{1}{\sqrt{s}}\frac{1}{s^2}p_0 \; ;$$

$$B_J = \frac{1}{\sqrt{s}}\frac{1}{s^2}2p_J \, .$$

**6.** Procédé selon l'une des revendications précédentes, dans lequel ladite étape a) comprend :

a1) le calcul desdites primitives d'ordre k compris entre 2 et N+1 dudit signal ; et
a2) leur échantillonnage en (J+1) points d'échantillonnage correspondant auxdits points d'extrémité des intervalles du support de l'ondelette dilaté d'un facteur s et translaté d'un temps $\tau$.

**7.** Procédé selon l'une des revendications précédentes, dans lequel ladite étape a) est mise en oeuvre en temps réel, lesdites primitives étant calculées en tant que sommes cumulatives pendant une étape d'acquisition dudit signal, puis stockées dans une première mémoire (MP) dudit processeur.

**8.** Procédé selon la revendication 7 dans lequel lesdites successions de coefficients $C_i^k(s)$ sont stockées dans une deuxième mémoire (MC) dudit processeur préalablement à ladite étape d'acquisition dudit signal.

**9.** Procédé de transformation en ondelettes d'un signal à temps discret ou discrétisé, comportant la détermination d'une pluralité de coefficients d'ondelette associés à différentes dilatations/translations d'une même ondelette mère, **caractérisé en ce que** chaque dit coefficient d'ondelette est déterminé par un procédé selon l'une des revendications précédentes.

**10.** Procédé de transformation en ondelettes d'un signal, comportant la détermination d'une pluralité de coefficients d'ondelette associés à différentes dilatations/translations d'une même ondelette mère, **caractérisé en ce que** chaque coefficient d'ondelette $W_s(\tau)$, correspondant à un décalage $\tau$ et à une dilatation s d'une ondelette mère $\psi(t)$, est déterminé par un procédé selon l'une des revendications 1 à 8, dans lequel :

- ladite étape a) est mise en oeuvre en temps réel, lesdites primitives étant calculées en tant que sommes cumulatives pendant une étape d'acquisition dudit signal, puis stockées dans une première mémoire (MP) dudit processeur ;
- lesdites étapes b) et c) sont mises en oeuvre en temps réel en utilisant des successions de coefficients préalablement stockées dans une deuxième mémoire (MC) dudit processeur ;
les coefficients d'ondelette $W_s(\tau)$, correspondant à un décalage $\tau$ et à une dilatation s d'une ondelette mère $\psi(t)$, étant déterminés à partir du temps t=$\tau$+$\alpha$/s, où $\alpha$ est la demi-largeur du support de ladite ondelette mère.

**11.** Procédé selon l'une des revendications précédentes, dans lequel ledit signal est un signal numérique.

**12.** Procédé selon l'une des revendications précédentes dans lequel le signal est un signal acquis par un détecteur.

**13.** Processeur configuré ou programmé pour mettre en oeuvre un procédé selon l'une des revendications précédentes.

*Fig. 1*

*Fig. 2*

Europäisches
Patentamt

European
Patent Office

Office européen
des brevets

**RAPPORT DE RECHERCHE EUROPEENNE**

Numéro de la demande

EP 12 18 5513

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | MASAKO OMACHI ET AL: "Fast calculation of continuous wavelet transform using polynomial", 2007 INTERNATIONAL CONFERENCE ON WAVELET ANALYSIS AND PATTERN RECOGNITION, 1 janvier 2007 (2007-01-01), pages 1688-1691, XP055034611, DOI: 10.1109/ICWAPR.2007.4421725 ISBN: 978-1-42-441065-1 * le document en entier * ----- | 1-13 | INV. G06F17/14 |
| Y | LORELLA FATONE: "Wavelet Bases Made of Piecewise Polynomial Functions: Theory and Applications", APPLIED MATHEMATICS, vol. 02, no. 02, 1 février 2011 (2011-02-01), pages 196-216, XP055034882, ISSN: 2152-7385, DOI: 10.4236/am.2011.22022 * page 196 - page 200 * ----- | 1-13 | |
| A | B. M. Kessler ET AL: "Wavelet Notes", , 4 décembre 2003 (2003-12-04), XP055034884, Extrait de l'Internet: URL:http://arxiv.org/pdf/nucl-th/0305025v2 .pdf [extrait le 2012-08-07] * le document en entier * ----- -/-- | 1-13 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| Berlin | 16 novembre 2012 | Huguet Serra, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 12 18 5513

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | UNSER M ET AL: "A family of polynomial spline wavelet transforms", SIGNAL PROCESSING, ELSEVIER SCIENCE PUBLISHERS B.V. AMSTERDAM, NL, vol. 30, no. 2, 1 janvier 1993 (1993-01-01), pages 141-162, XP026650391, ISSN: 0165-1684, DOI: 10.1016/0165-1684(93)90144-Y [extrait le 1993-01-01] * le document en entier * ----- | 1-13 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Berlin | 16 novembre 2012 | Huguet Serra, G |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

................................................................

& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. OMACHI ; S. OMACHI.** Fast calculation of continuous wavelet transform using polynomial. *Proceedings of the 2007 International Conference on Wavelet Analysis and Pattern Recognition, Beijing, Chine,* 02 Novembre 2007